# EUROPEAN PATENT APPLICATION

(11) **EP 1 411 617 A1**
(43) Date of publication of application: **21.04.2004**
(21) Application number: 03103645.2
(22) Date of filing: 02.10.2003
(51) Int. Cl.: H02J 9/02, H02J 9/06, H05B 41/46, H05B 37/04

(54) **Control for a group of lighting fixtures**

(30) Priority: 08.10.2002 FI 20021791
(71) Applicant: Teknoware Oy, 15200 Lahti (FI)
(72) Inventor: Kauko, Markku, 15680 Lahti (FI)
(74) Representative: Peltonen, Antti Sakari

(57) **Abstract**

The invention relates to an electrical system for a building or the like, the system comprising a group control means (9) coupled to a feeder line of at least one general lighting fixture (11) and configured to identify a failure in the power supply of the at least one general lighting fixture and to supply a control signal to at least one emergency lighting fixture (7) of at least one emergency lighting array (5). In the electrical system of the invention the at least one emergency lighting fixture (7) of at least one emergency lighting array (5) is configured such that the emergency lighting fixture (7) is switched on when a control signal supplied by the group control means (9) is received.

## Description

### BACKGROUND OF THE INVENTION

The invention relates to emergency lighting in a building or the like.

In prior art electrical systems an emergency lighting distribution board starts to feed the emergency lighting arrays of a building or the like when there is a power failure in the entire building or in the phase to which the emergency lighting distribution board is connected or when there is some other failure in the supply voltage of the emergency lighting distribution board. A problem with this arrangement is that if an individual lighting array is affected by a power failure while the emergency lighting distribution board still carries voltage, the emergency lighting distribution board does not switch the emergency lights on even if they were needed.

For example, if the general lighting fixtures in one floor of a multi-storey building are all coupled to the same lighting array and the supply voltage to this array fails, emergency lighting is not switched on and the entire floor is left in the dark, except for exit signs, if any.

It is also known in the art to inform the emergency lighting distribution board when a lighting array is affected by a power failure. A problem with this solution is the amount of wiring needed and the fact that the emergency lights are all switched on and off at the same time. When there is a power failure in a part of the building, the emergency lights are switched on in the entire building and the emergency lighting distribution board starts using battery voltage even though mains voltage would be available as well.

### BRIEF DESCRIPTION OF THE INVENTION

It is therefore an object of the invention to provide an electrical system for a building or the like, which system allows the above problems to be solved. It is a further object of the invention to provide a group control means for implementing the electrical system of the invention. The objects of the invention are achieved by an electrical system and a group control means characterized by what is stated in the independent claims. The preferred embodiments of the invention are disclosed in the dependent claims.

The basic idea of the invention is to connect one or more group control means to the electrical system, each control means controlling independently at least some of the emergency lights of the electrical system in response to failure information obtained from the supply line of a general lighting fixture.

An advantage of the electrical system and the group control means of the invention is that, compared with the prior art, it requires less wiring and the emergency lights can be controlled with greater precision. In addition, due to reduced wiring and possibly also to the longer service life of the batteries used as DC sources, the electrical system and the group control means of the invention allow costs savings to be obtained.

### BRIEF DESCRIPTION OF THE FIGURES

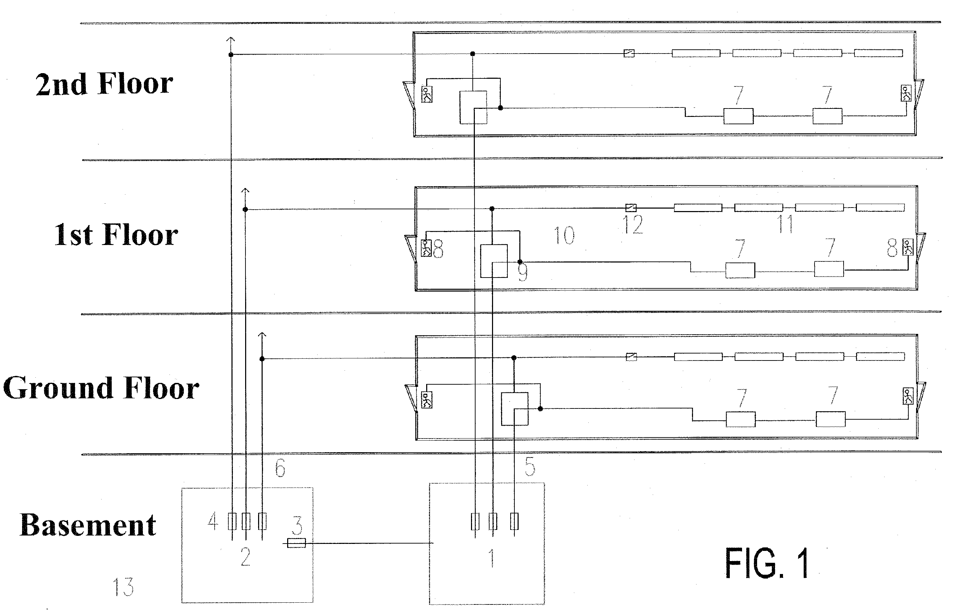

In the following, the invention will be described in greater detail with reference to the preferred embodiments and the accompanying Figure 1, which illustrates an embodiment of an electrical system of the invention.

### DETAILED DESCRIPTION OF THE INVENTION

Figure 1 shows an electrical system according to an embodiment of the invention in a three-storey building. The electrical system comprises a main distribution board 2 and an emergency lighting distribution board 1 located in the basement 13, three general lighting arrays 6, three emergency lighting arrays 5 with two emergency lights 7 coupled to each, two exit lights 8, and three group control means 9, each one of which is coupled to one emergency lighting array 5 and to one general lighting array 6.

The emergency lights 7 can be switched on either with alternating or direct voltage feed. In a normal situation the emergency lighting arrays 5 of the electrical system of Figure 1 are fed with the phase voltage of the mains voltage.

The electrical system of Figure 1 comprises a group control means 9 coupled to the feeder lead of an emergency lighting array 5, upstream of the emergency lights 7 that are to be switched on as need arises. The group control means 9 is controlled by information obtained from the supply line of the general lighting fixtures 11 located in the same room, the information being obtained upstream of a light switch 12. In other words, the group control means 9 controls the voltage of the general lighting array 6 to which it is coupled. Thus when a power failure occurs for some reason in the general lighting array 6, the group control means 9 identifies the failure and supplies a control signal to the "intelligent" emergency lights 7, which are then switched on by impact of the control signal.

In the electrical system of the invention the group control means 9 is preferably configured to supply the control signal to the emergency lights 7 over the feeder lead of the emergency lights. Alternatively, the group control means 9 may be configured to supply the control signal wirelessly or over a separate signal wire, for example. Naturally in these alternative solutions the group control means 9 does not need to be coupled to the feeder lead of the emergency lights 7.

In a solution where the group control means 9 is coupled to the feeder lead of an emergency lighting array, it is preferably coupled upstream of the emergency lights 7 that are to be switched on as need arises.

Due to the control signal supplied by the group control means 9 the emergency lights 7 are switched on and they stay on for a predetermined time t₂, which may be 30 seconds, for example. If the power failure continues, the group control means 9 supplies control signals for a predetermined time t₁ at intervals where t₁ < t₂ to ensure that the emergency lights will stay on uninterruptedly as the power failure continues. The time t₁ may be 20 seconds, for example.

The control signal supplied by the group control means 9 may consist of one or more network period portions, for example, removed from the mains voltage. Thus the control signal may be an alternation, for example, removed from the mains voltage, which the emergency light 7 identifies.

Since the emergency lights 7 are controlled independently and they operate on the normal phase voltage of the mains, the emergency lighting distribution board 1 does not receive, or need, information indicating that the emergency lights 7 of one of the emergency lighting arrays 5 are illuminated and therefore the batteries of the emergency lighting distribution board do not have to be used either.

In the electrical system of Figure 1 it has been possible to combine the exit light and emergency lighting arrays, because in a normal situation the emergency lighting arrays 5 and the exit lights 8 are fed with the same voltage. Alternatively, an electrical system of the invention may be provided such that the exit light and emergency lighting arrays are separate from one another.

In an electrical system in which the emergency lighting arrays 5 are in a normal situation fed with alternating voltage whereas when a disturbance occurs, they are fed with direct voltage, the emergency lights 7 are preferably configured such that they are switched on automatically when their supply voltage changes to direct voltage.

In electrical systems of the invention in which the emergency lighting arrays are always fed with alternating voltage, a known inverter may be used to convert battery voltage to alternating voltage, which is preferably substantially the same as the voltage supplied to the emergency lighting arrays 5 in a normal situation. In normal situations the voltage fed to the emergency lighting arrays 5 by the emergency lighting distribution board 1 is preferably substantially the same as the mains voltage.

As described above, the group control means 9 may be configured to supply control signals that control the emergency lights 7 such that they are switched on and stay on. The group control means 9 is preferably configured to supply an identical control signal both when the emergency light 7 is to be switched on and when it is to be maintained illuminated. It is also possible to use different switching and maintenance signals.

Alternatively, the group control means 9 of the electrical system of the invention may be configured to supply the switching on and switching off signals to the emergency lighting fixture, in which case the signals preferably differ from each other. It is obvious that the emergency lighting fixtures 7 to be used must be configured to co-operate with the group control means 9 employed.

Although in the electrical system of Figure 1 the group control means 9 is coupled to the feeder lead of one general lighting array 6 and to that of one emergency lighting array 5, the group control means 9 can also be coupled such that it is controlled by information obtained from the supply lines of a plurality of general lighting arrays 6 and it is also possible that one group control device 9 is configured to supply control signals to emergency lighting fixture 7 of more than one emergency lighting array 5. It is further possible that more than one group control means 9 is controlled by information obtained from the supply line of one and the same general lighting array 6 and also that more than one group control means 9 is arranged to supply control signals to one and the same emergency lighting array 5.

The electrical system of the invention preferably comprises a central battery system.

The electrical system of the invention does not necessarily require a conventional emergency lighting distribution board.

For example, the group control means 9 of the electrical system of the invention may be implemented as a group control card encapsulated alone or with another component of the electrical system.

It is obvious that the electrical system of the invention does not restrict the magnitude or frequency of the alternating voltage used in the mains. It is also obvious that the voltage level of the emergency lighting arrays 5 in the electrical system of the invention may be configured to differ from the voltage level of the supply mains.

The electrical system of the invention may be used not only in buildings but also in other similar premises, such as ships.

A person skilled in the art will find it apparent that the basic idea of the invention may be implemented in various ways. The invention and its embodiments are therefore not restricted to the above examples, but they may vary within the scope of the claims.

## Claims

1. An electrical system for a building or the like, the system comprising at least one general lighting array (6), which in turn comprises at least one general lighting fixture (11), and at least one emergency lighting array (5), which in turn comprises at least one emergency lighting fixture (7), **characterized in that** the electrical system comprises a group control means (9) coupled to the feeder lead of at least one general lighting fixture (11) and configured to identify a failure in the power supply of the at least one general lighting fixture and to supply a control signal to the at least one emergency lighting fixture (7) of the at least one emergency lighting array (5), the at least one emergency lighting fixture (7) of the at least one emergency lighting array (5) being configured such that the emergency lighting fixture (7) is switched on when the control signal supplied by the group control means (9) is received.

2. An electrical system according to claim 1, **characterized in that** in a normal situation the at least one emergency lighting array (5) is fed with alternating voltage of substantially the same magnitude as the phase voltage of the mains voltage.

3. An electrical system according to any one of the preceding claims, **characterized in that** the at least one general lighting fixture (11) from whose supply line the group control means 9 obtains its control information is located in the same room as the at least one emergency lighting fixture (7) of the at least one emergency lighting array (5).

4. An electrical system according to any one of the preceding claims, **characterized in that** it comprises at least one group control means (9) for each emergency lighting array (5) of the electrical system.

5. An electrical system according to any one of the preceding claims, **characterized in that** the electrical system further comprises one or more exit lights (8), each one of which is coupled to one of the emergency lighting arrays (5) of the electrical system.

6. An electrical system according to any one of the preceding claims, **characterized in that** it comprises at least one emergency lighting fixture (7) which is configured to be switched off when a predetermined time t₂ has lapsed from the reception of the last control signal supplied by the group control means (9) and **in that** when a power failure continues, the group control means (9) is configured to supply control signals such that there is a time difference t₁ between subsequent control signals and thus t₁ < t₂.

7. A group control means for controlling an electrical system, the group control means (9) being configured to be coupled at least to a first electric wire and to a second electric wire, **characterized in that** it comprises means for detecting a power failure in the first electric wire and means for supplying a control signal to the second electric wire.

8. A group control means according to claim 7, **characterized in that** the group control means (9) is arranged to supply a control signal which is generated by removing one or more network period portions from the mains voltage.
